# FASCICULE DE BREVET EUROPEEN

(11) **EP 1 371 858 B1**
(45) Date de publication et mention de la délivrance du brevet: **07.09.2005**
(21) Numéro de dépôt: 03291390.7
(22) Date de dépôt: 11.06.2003
(51) Int. Cl.: F15B 15/14

(54) **Articulation déportée de vérins pneumatiques ou hydrauliques**
Drehdurchführung für einen Pneumatik- oder Hydraulikzylinder
Rotatable fluid connection for pneumatic or hydraulic actuators

(30) Priorité: 11.06.2002 FR 0207164
(43) Date de publication de la demande: 17.12.2003
(73) Titulaire: Souchier, 77201 Marne-La-Vallee Cedex 1 (FR)
(72) Inventeur: Inderbitzin, André, 77200 Torcy (FR)
(74) Mandataire: Peaucelle, Chantal

(56) Documents cités:
- DE-A- 19 901 517
- DE-U- 9 411 004
- JP-U- 1 148 105
- US-A- 3 202 062
- US-A- 3 678 810

## Description

La présente invention porte sur un vérin pneumatique ou hydraulique avec articulation arrière, autrement dit pour lequel l'admission du fluide, liquide ou gazeux, s'effectue en extrémité du vérin. Plus précisément, l'objet de l'invention est un système permettant de modifier l'emplacement des zones de raccordement entre l'extrémité du vérin et le conduit d'alimentation en fluide, de telle sorte que ces dernières sont dans le prolongement de l'axe du vérin.

Les vérins pneumatiques en articulation arrière, fréquemment utilisés pour commander l'ouverture et la fermeture d'ouvrants, présentent une architecture classique :
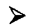 **Les moyens de fixation :** le vérin est rendu solidaire des autres éléments du dispositif grâce aux moyens de fixation prévus à cet effet à ses deux extrémités. Par exemple, le piston qui effectue le mouvement de translation peut être fixé au châssis d'une fenêtre alors que le cylindre, à l'extrémité arrière et près du système de raccordement, peut être fixé sur un pan de mur,
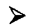 **Le système de raccordement :** l'arrivée d'air est assurée par deux voies d'admission symétriques, pour des raisons d'équilibre du vérin. Ces dernières, situées en extrémité arrière du vérin, sont montées sur un palier afin d'être libres de tourner autour d'un axe perpendiculaire à l'axe du vérin pour que l'alimentation d'air ne se fasse pas nécessairement dans l'axe de ce même vérin. Ceci permet de limiter l'encombrement longitudinal du vérin et de réaliser les raccords pneumatiques souhaités quelles que soient les contraintes spatiales imposées par l'environnement.

Le document DE 9411004 U décrit un dispositif selon le préambule de la revendication 1.

En fait, l'architecture retenue concernant les systèmes de raccordement est imposée par celle choisie pour les moyens de fixation. Etant donné que la surface de l'extrémité arrière du vérin est allouée à un moyen de fixation, les entrées d'alimentations pneumatiques sont nécessairement rejetées sur les côtés de ce dernier. En contrepartie, l'encombrement latéral global du vérin ne se limite pas à son diamètre, il est imposé par le système de raccordement fixé latéralement et correspond à la longueur du palier permettant la rotation de deux valves d'admission.

En conséquence, le problème technique qui doit résoudre l'invention est de réduire l'encombrement engendré par le système de raccordement, sachant qu'il est indispensable de conserver un moyen de fixation à articulation de l'extrémité arrière du vérin. De plus, ces deux contraintes ne doivent pas affecter l'équilibre du vérin lors de ses différentes phases de fonctionnement.

C'est pourquoi la présente invention consiste en un dispositif de déport de raccordements d'admission de fluide, gazeux ou liquide, dans le prolongement d'un vérin pneumatique ou hydraulique avec articulation arrière, composé d'un support fixe présentant suivant sa tranche des entrées d'alimentation pneumatique permettant les raccordements d'admission d'air, et d'un flasque d'embout du cylindre dudit vérin pneumatique, mis en relation par un axe d'articulation qui tourillonne entre une partie en saillie du flasque et les deux coudes du support fixe, caractérisé en ce que le support et le flasque dudit dispositif sont usinés de telle sorte que l'air y chemine dans deux conduits symétriques du support fixe vers le flasque, l'axe d'articulation, également usiné de façon à permettre le passage de l'air lors de la rotation du cylindre du vérin par rapport au support fixe, étant traversé, suivant son axe de révolution, par les deux conduits symétriques débouchant chacun à une extrémité dudit axe, lesdits conduits pénétrant dans ledit axe par deux trous radiaux et sortant dudit axe par deux autres trous radiaux, lesdits trous étant disposés dans des creux de rainures ménagées dans ledit axe et permettant le passage de l'air du support fixe au flasque.

L'intérêt du présent dispositif est de permettre les raccordements dans le prolongement même du vérin puisque l'encombrement latéral des pièces le constituant est identique à celui du vérin proprement dit.

Diverses autres caractéristiques de l'invention ressortent d'ailleurs de la description qui suit. Une forme de réalisation de l'objet est représentée, à titre d'exemple non limitatif, aux dessins annexés, sur lesquels :
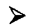 La figure 1 est une vue d'ensemble en perspective du dispositif,
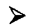 La figure 2 est une vue en perspective dans laquelle les pièces 2 et 3 sont coupées par un plan de symétrie et les pièces 1 et 2 sont coupées par deux plans horizontal et vertical,
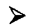 La figure 3 est une vue d'ensemble en perspective de l'axe d'articulation,
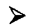 La figure 4 est une coupe transversale en perspective de l'axe d'articulation, faisant apparaître son architecture interne,
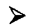 La figure 5 est une coupe du support fixe, par son plan de symétrie.

Selon l'invention, le déport des raccordements d'air en arrière du vérin pneumatique est possible grâce à l'usinage particulier des pièces du dispositif autorisant le passage de l'air dans ces mêmes pièces par des conduits pneumatiques. L'emplacement et le cheminement de ces conduits dans chaque pièce sont lié à leur forme.

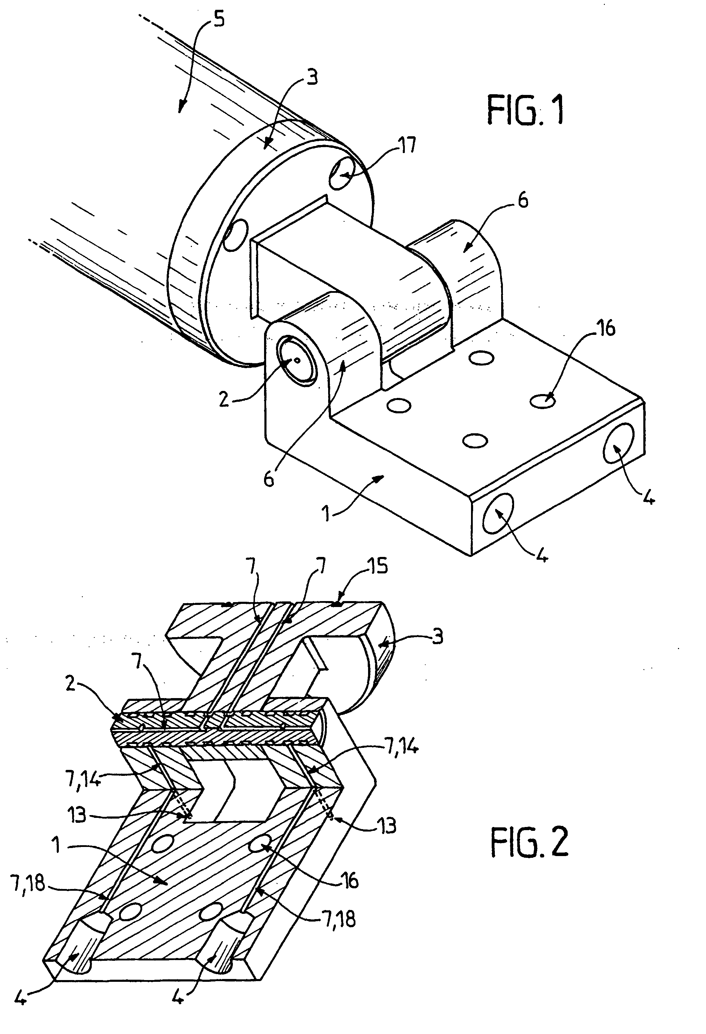

Comme on le voit notamment sur la figure 1, le dispositif selon l'invention est principalement composé d'un support fixe 1 constituant une embase qui présente suivant sa tranche des entrées d'alimentation pneumatique 4 permettant les raccords d'admission d'air, d'un flasque 3 monté en bout du cylindre du vérin pneumatique et d'un axe d'articulation 2 constitué d'un cylindre rainuré qui met en relation le support fixe 1 et le flasque 3.

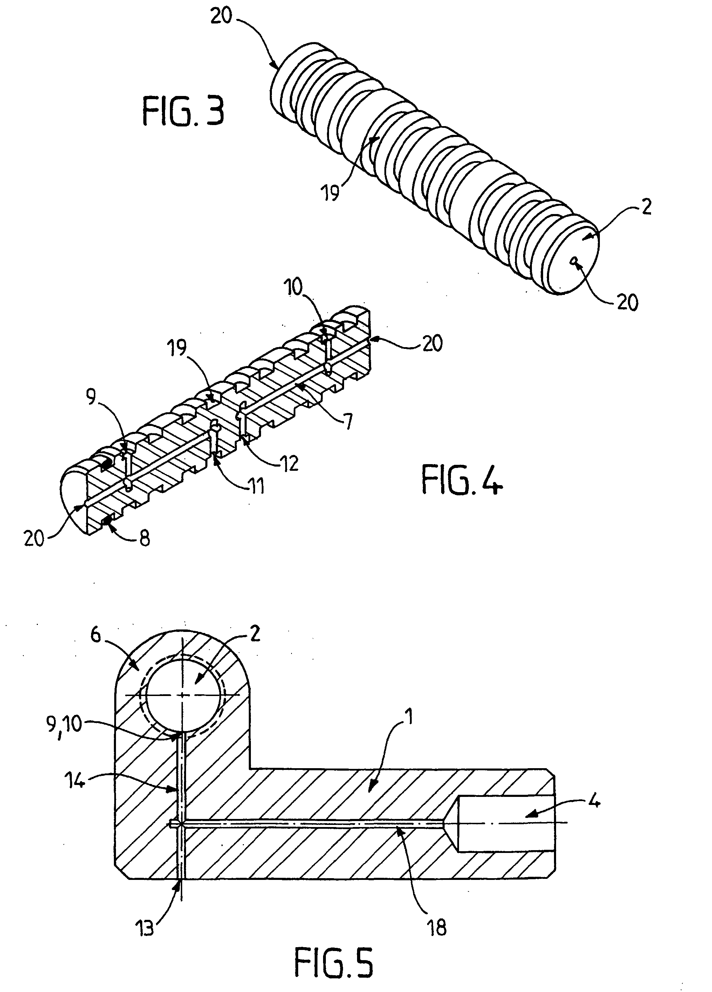

Dans le support fixe, comme le montrent les figures 2 et 5, l'air pénètre par les deux entrées 4 et emprunte deux tronçons constituant les deux conduits pneumatiques 7. Le premier tronçon 18 est situé dans le prolongement de l'entrée d'air 4. Le deuxième tronçon 14, perpendiculaire au premier, permet d'acheminer l'air dans les deux coudes 6 du support fixe 1, jusqu'à l'entrée de l'axe d'articulation 2. Un bouchon 13 en bille acier inox est emmanché en force à l'extrémité, située en sous - face du support fixe 1, des tronçons 14 des deux conduits 7.

Par ailleurs, l'axe d'articulation doit remplir simultanément deux fonctions distinctes : d'une part le transit de l'air sans la moindre fuite du support vers le flasque 3, d'autre part la rotation du flasque par rapport au support fixe 1. Pour ce faire, comme le montre la figure 4, cet axe 2 est traversé suivant son axe de révolution par les deux conduits symétriques 7 débouchant chacun à une extrémité dudit axe. Lesdits conduits, qui sont les prolongements des tronçons 14 du support fixe 1, pénètrent dans ledit axe par deux trous radiaux 9 et 10 et en sortent par deux autres trous radiaux 11 et 12. Les conduits subissent deux renvois d'angle successifs à 90° afin d'arriver, en sortie d'axe, directement dans la partie en saillie du flasque 3.

Selon l'invention, comme le montrent les figures 2, 3 et 4, l'axe d'articulation 2 comporte des rainures radiales 19 visant à loger des joints toriques 8 afin d'éviter les fuites lors du fonctionnement du vérin. Sur la figure 4, n'est représenté qu'un seul joint torique 8 à l'extrémité de l'axe d'articulation 2, mais il est bien évident que chaque rainure 19 dudit axe en comporte un. Les trous 9, 10, 11 et 12 sont disposés dans des creux des rainures 19. De même, pour empêcher les fuites, un bouchon 20 en bille d'acier inox est emmanché en force à chaque extrémité de l'axe 2.

En outre, comme le montre la figure 2, les conduits pneumatiques parallèles 7 du flasque 3 acheminent l'air depuis la sortie, au niveau des trous 11 et 12, de l'axe, jusqu'au vérin 5. Le flasque ainsi que sa partie en saillie sont solidaires du vérin grâce aux moyens de fixation 17. A son raccordement avec l'arrière du vérin, le flasque est muni d'un logement pour joint torique 15 afin d'éviter les fuites au niveau dudit raccordement.

Toujours selon l'invention, l'embase du support 1 est traversée par des trous 16 n'interférant pas avec les conduits pneumatiques 7, lesdits trous étant destinés à recevoir les moyens de fixation dudit support.

Compte-tenu du faible degré de complexité technologique du mécanisme et de la réduction sensible de l'encombrement latéral qu'il permet, ce dispositif présente un intérêt pratique certain pour la commande d'ouvrants de toutes sortes.

L'invention n'est pas limitée aux vérins pneumatiques comme décrit ci-dessus, elle s'étend également aux vérins hydrauliques.

## Revendications

1. Dispositif de déport de raccordements d'admission de fluide, gazeux ou liquide, dans le prolongement d'un vérin pneumatique ou hydraulique avec articulation arrière, composé d'un support fixe (1) présentant suivant sa tranche des entrées d'alimentation (4) permettant les raccordements d'admission de fluide, et d'un flasque (3) d'embout du cylindre dudit vérin (5), mis en relation par un axe d'articulation (2) qui tourillonne entre une partie en saillie du flasque et les deux coudes (6) du support fixe (1), dans lequel le support et le flasque dudit dispositif sont usinés de telle sorte que l'air y chemine dans deux conduits symétriques (7) du support fixe (1) vers le flasque (3), l'axe d'articulation (2), également usiné de façon à permettre le passage du fluide lors de la rotation du cylindre du vérin (5) par rapport au support fixe (1), l'axe d'articulation (2) étant traversé, suivant son axe de révolution, par les deux conduits symétriques (7), lesdits conduits pénétrant dans ledit axe par deux trous radiaux (9) et (10) et sortant dudit axe (2) par deux autres trous radiaux (11) et (12), **caractérisé en ce que** lesdits trous sont disposés dans des creux de rainures (19) ménagées dans ledit axe (2) et qu'ils permettent le passage du fluide du support fixe (1) au flasque (3) et **en ce que** chacun des deux conduits symétriques débouche à une extrémité dudit axe (2).

2. Dispositif selon la revendication 1, **caractérisé en ce que** l'axe d'articulation (2) comporte des rainures radiales visant à loger des joints toriques (8) sur l'axe, afin d'éviter les fuites lors du fonctionnement du vérin pneumatique (5).

3. Dispositif selon l'une des revendications 1 et 2, **caractérisé en ce qu'**un bouchon (20) en bille d'acier inox est emmanché en force à chaque extrémité de l'axe d'articulation (2) pour empêcher les fuites de fluide.

4. Dispositif selon l'une quelconque des revendications 1 à 3, **caractérisé en ce qu'**un bouchon (13) en bille d'acier inox est emmanché en force, en sous - face du support (1), à l'extrémité des tronçons (14) des deux conduits symétriques (7) acheminant le fluide en entrée de l'axe d'articulation (2).

5. Dispositif selon l'une quelconque des revendications 1 à 4, **caractérisé en ce que** le flasque (3) est muni, à son raccordement avec l'arrière du vérin, d'un logement pour joint torique (15) afin d'éviter les fuites au niveau dudit raccordement.

6. Dispositif selon l'une quelconque des revendications précédentes, **caractérisé en ce que** l'embase du support fixe (1) est traversée par des trous (16) n'interférant pas avec les deux conduits symétriques (7), lesdits trous étant destinés à recevoir les moyens de fixation dudit support.

## Patentansprüche

1. Vorrichtung zum Versetzen der Einlaßanschlüsse für gasige oder flüssige Fluide in Verlängerung eines pneumatischen oder hydraulischen Stellzylinders mit hinten liegendem Gelenk, bestehend aus einer festen Stütze (1), die entlang der Stirnfläche Zuführeinlässe (4) aufweist, welche das Anschließen der Fluideinlässe ermöglichen, und aus einem Endflansch (3) des Zylinders des Stellzylinders (5), die durch eine Gelenkachse (2) miteinander verbunden sind, welche sich zwischen einem vorspringenden Teil des Flanschs und den beiden Winkelstücken (6) der festen Stütze (1) dreht, wobei die Stütze und der Flansch der Vorrichtung derart ausgebildet sind, daß sich das Fluid in zwei symmetrischen Leitungen (7) der festen Stütze (1) in Richtung des Flanschs (3) bewegt, wobei die Gelenkachse (2), die ebenfalls für den Durchlaß von Fluid beim Drehen des Zylinders des Stellzylinders (5) in bezug auf die feste Stütze (1) ausgebildet ist, in Richtung ihrer Drehachse von den beiden symmetrischen Leitungen (7) durchquert wird, wobei die Leitungen über zwei radiale Löcher (9) und (10) in die Achse eintreten und die Achse (2) durch zwei andere radiale Löcher (11) und (12) verlassen, **dadurch gekennzeichnet, daß** die Löcher in den Vertiefungen von in der Achse (2) ausgebildeten Nuten (19) angeordnet sind, und daß sie den Durchtritt des Fluids von der festen Stütze (1) in den Flansch (3) ermöglichen, und daß jede der beiden symmetrischen Leitungen an einem Ende der Achse (2) mündet.

2. Vorrichtung nach Anspruch 1, **dadurch gekennzeichnet, daß** die Gelenkachse (2) radiale Nuten aufweist, die der Aufnahme von O-Ringen (8) auf der Achse dienen, um Leckverluste während des Betriebs des pneumatischen Stellzylinders (5) zu verhindern.

3. Vorrichtung nach einem der Ansprüche 1 und 2, **dadurch gekennzeichnet, daß** ein Stopfen (20) in Form einer Inox-Stahlkugel mit Kraft in jedes Ende der Gelenkachse (2) gepreßt ist, um Fiuidleckverluste zu verhindern.

4. Vorrichtung nach einem der Ansprüche 1 bis 3, **dadurch gekennzeichnet, daß** ein Stopfen (13) in Form einer Inox-Stahlkugel mit Kraft auf der Unterseite der Stütze (1) in das Ende der Abschnitte (14) der beiden symmetrischen Leitungen (7) gepreßt ist, welche das Fluid in die Gelenkachse (2) leiten.

5. Vorrichtung nach einem der Ansprüche 1 bis 4, **dadurch gekennzeichnet, daß** der Flansch (3) an seiner Verbindung mit dem hinteren Ende des Stellzylinders mit einer Aufnahme für einen O-Ring (15) versehen ist, um Leckverluste an dieser Verbindung zu verhindern.

6. Vorrichtung nach einem der vorhergehenden Ansprüche, **dadurch gekennzeichnet, daß** die Basis der festen Stütze (1) von Löchern (16) durchsetzt ist, welche die beiden symmetrischen Leitungen (7) nicht stören und welche der Aufnahme von Einrichtungen zum Befestigen der Stütze dienen.

## Claims

1. Device for displacing connections admitting gaseous or liquid fluid, in the extension of a pneumatic or hydraulic jack with a rear joint, composed of a fixed support (1) having, along its edge, supply inlets (4) allowing connections for admission of fluid, and a flange (3) at the tip of the cylinder of said jack (5), connected by a joint pin (2) which pivots between a projecting part of the flange and the two bends (6) of the fixed support (1), in which the support and the flange of said device are machined in such a way that the air travels here in two symmetrical ducts (7) of the fixed support (1) towards the flange (3), the joint pin (2) also machined so as to allow the passage of the fluid during the rotation of the cylinder of the jack (5) relative to the fixed support (1), the joint pin (2) being traversed, along its axis of rotation, by the two symmetrical ducts (7), said ducts penetrating said pin through two radial holes (9) and (10) and leaving said pin (2) through two other radial holes (11) and (12), **characterized in that** said holes are arranged in the recesses of grooves (19) worked in said pin (2), and **in that** they allow the passage of the fluid from the fixed support (1) to the flange (3), and **in that** each of the two symmetrical ducts discharges at one end of said pin.

2. Device according to claim 1, **characterized in that** the joint pin (2) comprises radial grooves intended to house O-ring seals (8) on the pin, in order to prevent leaks during operation of the pneumatic jack (5).

3. Device according to one of claims 1 and 2, **characterized in that** a stainless steel ball stopper (20) is pressed into each end of the joint pin (2) in order to prevent leaks of fluid.

4. Device according to any one of claims 1 to 3, **characterized in that** a stainless steel ball stopper (13) is pressed in, on the underside of the support (1), at the end of the sections (14) of the two symmetrical ducts (7) transporting the fluid entering the joint pin (2).

5. Device according to any one of claims 1 to 4, **characterized in that** the flange (3) is provided, at its connection with the rear of the jack, with a housing for an O-ring seal (15) in order to prevent leaks from said connection.

6. Device according to any one of the previous claims, **characterized in that** the base of the fixed support (1) is pierced by holes (16) which do not interfere with the two symmetrical ducts (7), said holes being designed to receive the fixing means of said support.
